# EUROPEAN PATENT APPLICATION

(11) **EP 3 366 444 A1**
(43) Date of publication of application: **29.08.2018**
(21) Application number: 16857164.4
(22) Date of filing: 18.08.2016
(51) Int. Cl.: B29C 33/38, B29C 35/02

(54) **METHOD FOR PRODUCING MOLD FOR RUBBER ARTICLE, MOLD FOR RUBBER ARTICLE, METHOD FOR PRODUCING MOLD MEMBER, AND MOLD MEMBER**

(30) Priority: 23.10.2015 JP 2015209285; 23.10.2015 JP 2015209286
(71) Applicant: Bridgestone Corporation, Chuo-Ku Tokyo 104-8340 (JP)
(72) Inventor: ISHIHARA, Yasuyuki, Tokyo 104-8340 (JP)
(74) Representative: Oxley, Robin John George
(86) International application number: PCT/JP2016/074136
(87) International publication number: WO 2017/068846

(57) **Abstract**

The heat transfer characteristic of a mold for rubber article provided with a rubber forming part formed by sintering of a metal powder can be simply and easily improved.

The mold for rubber article (1) is provided with; a rubber forming part (10) to mold a rubber article, while being in contact with the rubber article in a contact part (11), and a holding part (20) to hold the rubber forming part. The rubber forming part (10) is formed by sintering of the metal powder. At the time of casting of the holding part (20), a part or the whole of parts except for the contact part (11) of the rubber forming part (10) is cast in the holding part (20), so that the holding part (20) and a cast-in part (14) of the rubber forming part (10) cast in the holding part (20) are joined to each other.

## Description

### BACKGROUND OF THE INVENTION

### Field of the Invention

The present invention relates to a method for producing mold for rubber article to mold a rubber article, a mold for rubber article, a method for producing mold member to produce a mold member to be used for a mold for rubber article, and a mold member.

### Related Background of the Invention

When a rubber article is formed by a mold for rubber article, generally a mold for rubber article is heated by a heating means, and then a rubber article is heated by the heat of the mold for rubber article. The rubber article is molded by a rubber forming part while the rubber article is heated. The rubber forming part of the mold for rubber article is formed into various shapes corresponding to the shapes of the rubber articles and is formed into the complicated shapes that are hard to be formed by machining depending on the shape of the rubber article in some cases. For example, in a mold for tire to mold a tire which is a rubber article, the rubber forming part has thin projections (sipe blades etc.) or recesses each having a sharp corner shape corresponding to a tread pattern of the tire. Therefore, the mold for rubber article is often produced by casting, and all parts of the mold for rubber article including the rubber forming part are integrally formed.

In contrast, there has been known a conventional mold for tire which is produced by sintering of a metal powder to form a rubber forming part (lining assembly), and then attaching the rubber forming part to a supporting block (cf. Patent Literature 1). In the conventional mold for tire described in Patent Literature 1, the rubber forming part is directly formed in various shapes by the sintering using the laser based on the shape data of the mold.

However, the shape of the metal powder may be left on the surface of the rubber forming part when the metal powder is sintered, and thus the surface roughness is sometimes increased. In addition, according to the size of the metal powder, the surface unevenness of the rubber forming part is sometimes also increased. During the sintering of the metal powder, there is also a fear of generation of distortion in the rubber forming part, and metal oxide is attach to the surface of the rubber forming part, too. In this case, voids are generated between the rubber forming part and the supporting block, and an oxide layer is formed between the rubber forming part and the supporting block. As a result, the heat transfer loss from the supporting block to the rubber forming part is increased, and thus the heat transfer characteristic of the mold for tire is deteriorated.

When the heat transfer characteristic of the mold for tire is deteriorated, the molding time for tire (vulcanizing time) is elongated, and thus the molding efficiency of the tire is deteriorated. Therefore, it is required to improve the heat transfer characteristic of the mold for tire from perspective of improving the molding efficiency of the tire which is a rubber article. In addition, it is necessary to simply and easily improve the heat transfer characteristic to suppress a cost increase.

By the way, the mold for rubber article is comprised one or more mold members and used for the molding of the rubber article . The mold member of the mold for rubber article is generally produced by machining or casting, and is used as a part or the whole of the mold for rubber article.

In regard to the mold member, since the mold member is repeatedly used for the molding of the rubber article, it is necessary to suppress a shape change and breakage, and the strength thereof is required to be improved. However, it is sometimes difficult=to perform the machining or casting of the mold member when the mold member is strengthened by the changing of material. Depending on the shape or structure of the mold member, a complicated machining is also sometimes necessary for strengthening of the mold member.

In addition, for example, in the mold for tire to mold the tire which is a rubber article, the mold has a plurality of sipe blades for molding sipes on the tire and a plurality of vent holes (or slits) for venting the air at the time of vulcanization of the tire. The sipe blade is a thin projection corresponding to the shape of the sipe (fine groove), and the vent hole is a fine hole part penetrating the mold. In regard to the mold for tire, since efforts and times are required for forming the sipe blades and the vent holes, it is required to simply and easily strengthen the mold member from perspective of suppressing an increase in the production time and the cost.

Particularly, since the sipe blade which is the mold member is sometimes broken in a short term by a force which the mold member receives at the time of tire molding, improvement in the strength of the sipe blade is required.

In addition, when the sipe blade is formed into a complicated shape corresponding to a shape of the sipe, efforts and times required for forming the sipe blade are increased due to the welding or the special processing etc. of a plurality of parts. Therefore, it is required to suppress the increase in the production time and the cost by simply and easily strengthening of the sipe blade if the strength of the sipe blade is improved.

A mold main body and a sipe blade of the mold for tire are sometimes each formed as a mold member by powder laminate shaping, By the powder laminate shaping, powder is cured to be formed into a cured layer and thereafter a plurality of the cured layers are sequentially laminated to form a mold member . However, when the mold member is formed in this way, the strength of the mold member is apt to be influenced by surface roughness or powder connectivity.

In this case, it is necessary to simply and easily strengthen the mold member to improve the strength of the mold member.

Still further, aluminum material having an iron plating coating layer on its surface has been known (cf. Patent Literature 2) .

In the conventional aluminum material described in Patent Literature 2, a crack is generated in the iron plating coating layer. Thereafter, a thermoplastic resin is impregnated in the iron plating coating layer or a solid lubricant is adhered to the iron plating coating layer. In this way, a wear characteristic of the aluminum material is improved. However, the conventional aluminum material is the materials which is improved only in the wear characteristic, and has no relation with the improvement of the strength of the mold member. In addition, the production of the conventional aluminummaterial requires efforts and times, and then the production time and the cost are increased.

### Prior Art

### Patent Literature

Patent Literature 1: Japanese Unexamined Patent Application Publication (Translation of Application) No. 2012-512069
Patent Literature 2: Japanese Patent Laid-Open No. H11-29892

### SUMMARY OF THE INVENTION

### Problems to be solved by Invention

The present invention has been made in view of the above-described conventional problems and a purpose thereof is to simply and easily improve the heat transfer characteristic of the mold for rubber article provided with the rubber forming part formed by sintering of the metal powder. In addition, other purpose is to simply and easily strengthen a mold member used for the mold for rubber article and thus to improve the strength of the mold member.

### Means for solving Problems

The present invention is a method for producing mold for rubber article to produce a mold for rubber article provided with; a rubber forming part to mold a rubber article, while being in contact with the rubber article at a contact part, and a holding part to hold the rubber forming part. The method for producing mold for rubber article comprises steps of forming a rubber forming part by sintering of a metal powder, and casting to cast a part or the whole of parts except for the contact part of the rubber forming part in the holding part and to join the holding part and a cast-in part of the rubber forming part cast in the holding part, at the time of casting of the holding part.

The present invention is a mold for rubber article to mold a rubber article. The mold for rubber article comprises; the rubber forming part which is a sintered body of the metal powder and molds the rubber article while being in contact with the rubber article at the contact part thereof, and the holding part which is a cast body having a part or the whole of parts except for the contact part of the rubber forming part cast therein and holds the rubber forming part.

The present invention is a method for producing mold member to produce a mold member used for the mold for rubber article. The method for producing mold member comprises the steps of forming a mold member to be in a state preceding the plating, and plating to the surface of the mold member after the formation so as to coat the surface of the mold member with a plating film.

The present invention is a mold member used for the mold for rubber article. The mold member has a plating film coating the surface thereof.

### EFFECTS OF THE INVENTION

According to the present invention, the heat transfer characteristic of the mold for rubber article provided with the rubber forming part formed by sintering of the metal powder can be simply and easily improved. In addition, a mold member used for the mold for rubber article can be simply and easily strengthened, so that the strength of the mold member is improved.

### BRIEF DESCRIPTION OF THE DRAWINGS

Figs. 1A to 1C are views illustrating a mold for rubber article of the first embodiment;
Figs. 2A to 2D are views illustrating a rubber forming part of the first embodiment;
Figs. 3A and 3B are sectional views illustrating an enlarged periphery of the rubber forming part;
Figs. 4A to 4F are perspective views schematically illustrating a shape of the rubber forming part;
Figs. 5A to 5C are views illustrating a rubber forming part of a mold for rubber article of the second embodiment;
Figs. 6A to 6C are views illustrating a mold for rubber article of the second embodiment;
Figs. 7A to 7C are views illustrating a rubber forming part of a mold for rubber article of the third embodiment;
Figs. 8A to 8C are views illustrating the mold for rubber article of the third embodiment;
Figs. 9A to 9C are views illustrating a rubber forming part of a mold for rubber article of the fourth embodiment;
Figs. 10A to 10C are views illustrating the mold for rubber article of the fourth embodiment;
Figs. 11A and 11B are views illustrating a method for producing a mold for rubber article of the fifth embodiment;
Figs. 12A and 12B are views illustrating other method for producing the mold for rubber article of the fifth embodiment;
Figs. 13A to 13C are views illustrating a mold member used for a mold for rubber article of the sixth embodiment;
Figs. 14A to 14C are views illustrating a mold member used for a mold for rubber article of the seventh embodiment;
Figs. 15A to 15C are views illustrating the mold member of the seventh embodiment;
Figs. 16A to 16C are views illustrating a mold for rubber article of the eighth embodiment;
Figs. 17A to 17C are sectional views illustrating a mold member of the eighth embodiment;
Figs. 18A1, 18A2, 18B1 and 18B2 are views illustrating a mold member of the ninth embodiment;
Figs. 19A, 19B1, 19B2, 19C1 and 19C2 are views illustrating the mold member of the ninth embodiment;
Figs. 20A, 20B1 to 20B3 and 20C1 to 20C3 are views illustrating the mold member of the ninth embodiment; and
Fig. 21A and 21B are sectional views illustrating a part of the mold member before and after plating.

### DESCRIPTION OF THE PREFERRED EMBODIMENTS

### (A method for producing mold for rubber article and a mold for rubber article)

An embodiment of a method for producing mold for rubber article and a mold for rubber article of the present invention will be described by referring to the attached drawings.

The mold for rubber article of the present embodiment (the first to fifth embodiments) is a mold for rubber molding to mold a rubber article (a product made of rubber) and produced by the method for producing mold for rubber article of the present embodiment.

In the following, a plurality of embodiments of the method for producing mold and the mold will be explained, taking a mold for tire (mold for tire molding) as an example of a mold for rubber article (it is merely called as a mold in the followings.) . Therefore, the rubber article is a tire. The mold is used as a mold for tire at the time of molding the tire (at the time of vulcanization) and molds the tire. For example, a tread pattern is formed on a tread part of the tire by the mold, when the tread part of the tire is molded by the mold.

### (The first embodiment)

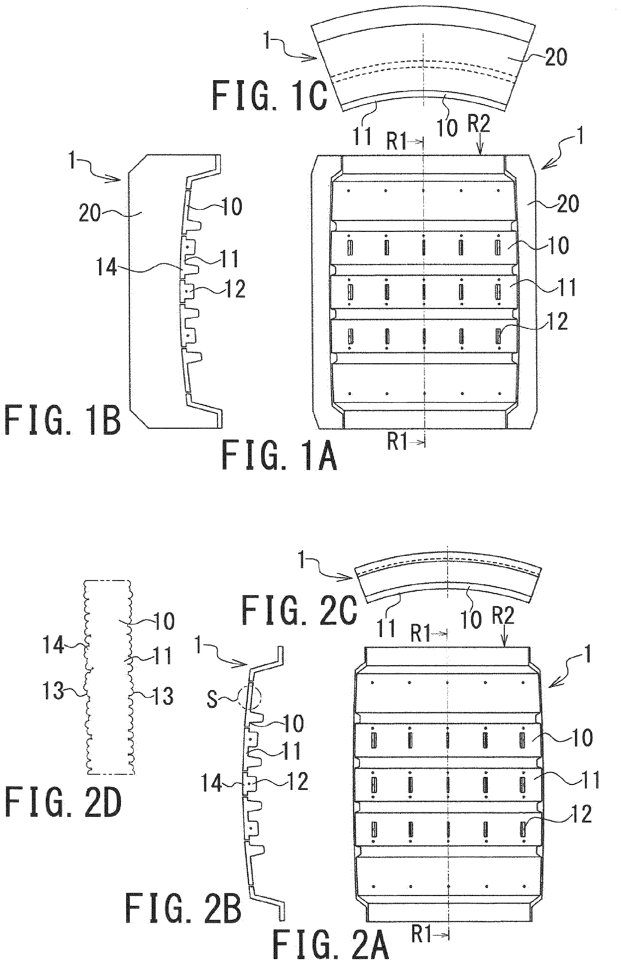

Figs. 1 are views illustrating a mold 1 of the first embodiment, and Fig. 1A is a front view of the mold 1. Fig. 1B is a sectional view of the mold 1 taken along the line R1-R1 of Fig. 1A, and Fig. 1C is a plan view of the mold 1 viewed from the direction shown by the arrow R2 of Fig. 1A.

As illustrated, the mold 1 is a tread mold to mold a tread part of the tire and is formed into a shape of piece (sector shape) of a ring-shaped member circumferentially divided into plural pieces. A plurality of the molds 1 is assembled into a ring form, and then the tread part of the tire is formed by inner circumference parts (rubber forming parts 10) of the plurality of the molds 1.

The mold 1 is provided with a rubber forming part 10 to mold a rubber article and a holding part 20 to hold the rubber forming part 10. The rubber forming part 10 has a contact part 11 which is a surface layer part on the rubber article side of the mold 1 and is in contact with the rubber article, and has a plurality of projections 12 formed on the contact part 11. The rubber forming part 10 is in contact with the rubber article through the contact part 11 and molds the rubber article by the contact part 11. The projection 12 is, for example, a thin plate-like member or protrusion, and projects from the contact part 11. The holding part 20 is formed into a block shape and a part or the whole of parts except for the contact part 11 of the rubber forming part 10 is cast therein

Here, the rubber forming part 10 is a tread forming part to form the tread part of the tire, and the contact part 11 is formed into the shape corresponding to a tread pattern of the tire. In addition, the projection 12 is a plate-like sipe blade to form a sipe on the tire, and is integrally formed with the contact part 11. At the time of the vulcanization of the tire, the mold 1 is in contact with the tread part of the tire through the rubber forming part 10 and forms the tread pattern on the tread part of the tire. At the same time, the sipe is formed on the tread part of the tire by the projection 12.

The shape of the rubber forming part 10 is complicated compared to the holding part 20, and the rubber forming part 10 is formed in various shapes corresponding to the tread pattern of the tire. In addition, the cost of the mold 1 increases when the whole of the mold 1 is formed by sintering. Therefore, only the rubber forming part 10 is formed by sintering of the metal powder and the rubber forming part 10 after the formation is held by the holding part 20. In this way, an increase in the cost of the mold 1 is suppressed.

Figs. 2 are views illustrating a rubber forming part 10 of the first embodiment and illustrate the rubber forming part 10 like Figs. 1. In addition, Fig. 2D shows an S part of Fig. 2B schematically.

As illustrated, at the time of the production of the mold 1, the rubber forming part 10 including the contact part 11 is formed by sintering of the metal powder. Specifically, the rubber forming part 10 that is a sintered body of the metal powder is formed by powder laminate shaping. In the powder laminate shaping, a metal powder layer of the predetermined thickness is formed, the metal powder layer is irradiated by a light beam (e.g., a laser) and the metal powder is sintered by the heat of the light beam. In this way, the sintered layer (the hardened layer) made of sintered metal powder is formed. In addition, the metal powder layer and the sintered layer are repeatedly formed and a plurality of the sintered layers is sequentially laminated and thus the rubber forming part 10 is formed into a cubic shape.

In this way, by the powder laminate shaping, the sintered layers are laminated so that the rubber forming part 10 is formed and thus the rubber forming part 10 is formed into a predetermined shape (cf. Fig. 2A to Fig. 2C). A shape of the metal powder is left on a surface 13 of the rubber forming part 10 (cf. Fig. 2D), and an unevenness corresponding to sizes of the metal powder is generated on the surface 13 of the rubber forming part 10. Subsequently, the holding part 20 is cast in a casting flask, and at the same time, parts except for the contact part 11 of the rubber forming part 10 are cast in the holding part 20 in the casting flask.

Before casting of the holding part 20, the rubber forming part 10 is attached to the casting flask and a part thereof (cast-in part 14) to be cast in the holding part 20 is exposed in the inside space of the casting flask. In the state, molten material of the holding part 20 is poured into the casting flask and then the poured materials is solidified.
In this way, the holding part 20 is cast so as to wrap the cast-in part 14 of the rubber forming part 10, and the rubber forming part 10 after the formation is cast in the holding part 20. In addition, the holding part 20 is joined to the rubber forming part 10 by casting (insert-casting) and then the rubber forming part 10 is held by the holding part 20.

The material of the holding part 20 is the metal material (aluminum alloy, zinc alloy, magnesium alloy etc.) capable of cast the rubber forming part 10 therein. The melting point of the material of the holding part 20 is lower than the melting point of the material of the rubber forming part 10. The holding part 20 is cast from molten material heated to a temperature at which the rubber forming part 10 is not dissolved.
At the time of the casting of the holding part 20, a part or the whole of parts except for the contact part 11 of the rubber forming part 10 is cast in the holding part 20. The holding part 20 and the cast-in part 14 of the rubber forming part 10 cast in the holding part 20 are joined and thereby, the rubber forming part 10 and the holding part 20 are integrated and the mold 1 is produced. The holding part 20 is formed into a predetermined external shape by machining.

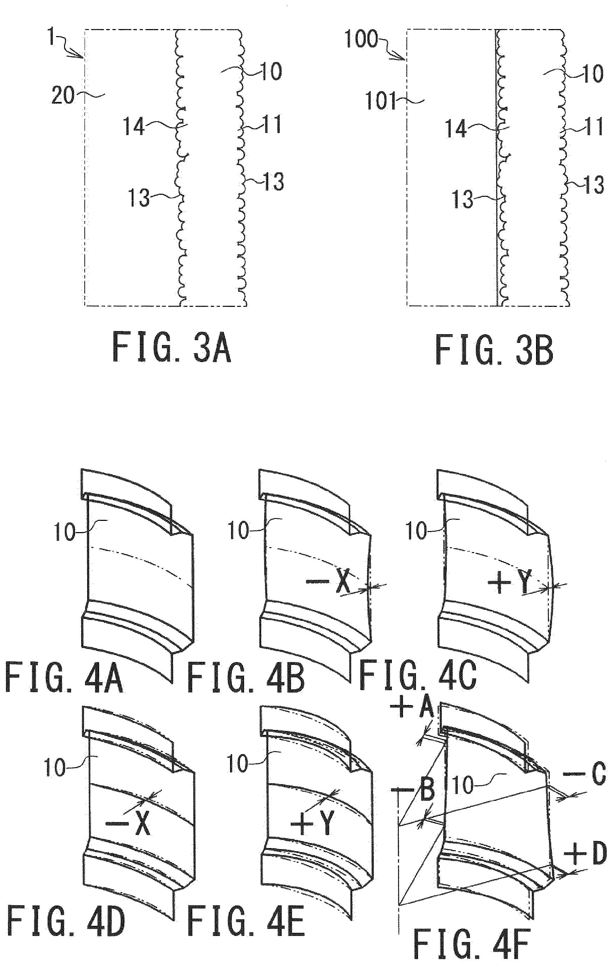

Figs. 3 are enlarged sectional views illustrating a periphery of the rubber forming part 10 and shows the rubber forming part 10 schematically like Fig. 2D. In addition, Fig. 3A shows a part of the mold 1 of the first embodiment, and Fig. 3B shows a part of a mold 100 of the comparative example.

As illustrated, in the mold 100 of the comparative example, a holding part 101 is formed by machining (cf. Fig. 3B). The rubber forming part 10 is attached to the holding part 101 so as to be held by the holding part 101. In the state, voids are generated between the rubber forming part 10 and the holding part 101 on the contact surfaces of the rubber forming part 10 and the holding part 101. The voids correspond to the recesses of the surface 13 of the rubber forming part 10. When heat is transmitted from the holding part 101 to the rubber forming part 10, a heat transfer loss is increased due to the voids, which results in an elongation of time required for the vulcanization of the tire.

In contrast, in the mold 1 of the first embodiment (cf. Fig. 3A), the holding part 20 is a cast body having a part or the whole of parts except for the contact part 11 of the rubber forming part 10 cast therein. At the time of casting of the holding part 20, the molten material of the holding part 20 enters the recesses of the surface 13 of the rubber forming part 10, and thus the recesses of the surface 13 are filled up.
Therefore, on the contact surfaces of the rubber forming part 10 and the holding part 20, generation of the void is suppressed between the rubber forming part 10 and the holding part 20, and thus the rubber forming part 10 and the holding part 20 closely adhered to each other. In this way, heat is effectively transmitted from the holding part 20 to rubber forming part 10, and thus the heat transfer loss from the holding part 20 to the rubber forming part 10 is reduced. In addition, since the molding time (vulcanizing time) of the tire is shortened, the molding efficiency of the tire is improved.

Therefore, the problem arising from forming of the rubber forming part 10 by sintering is simply and easily solved and thus the heat transfer characteristic of the mold 1 can be improved. In addition, at the time of casting of the holding part 20, the rubber forming part 10 and the holding part 20 can be directly and closely adhered to each other by eliminating the oxide on the surface 13 of the rubber forming part 10. In this way, for example, the mold 1 can be provided with the heat transfer characteristic that is equivalent to the heat transfer characteristic of the mold of which the whole is formed by casting.

Still further, the holding part 20 may be formed by casting using materials other than the metal. For example, materials of the holding part 20 may be resin materials. Therefore, the casting may include a cast molding of resin materials . The resin materials is, for example, the resin material of the self-curing type in which heat-resistant and thermal conductivity are improved (or the resin materials of the thermosetting type) (epoxy resin containing metal powder etc.).

Next, a method for producing mold and a mold of another embodiment will be described. Basically, the method for producing mold of another embodiment is constituted similarly to the method for producing the mold 1 of the first embodiment and exhibits a similar effect.
Therefore, in the following, a matter differing from the matter which is already explained, and the matter the same as the matter which is already explained, is omitted. In addition, with respect to the mold of another embodiment, same names and same reference marks as those of the component of the mold 1 are used for a component corresponding to the component of the mold 1.

### (The second embodiment)

The rubber forming part 10 is formed similarly to the first embodiment (cf. Figs. 2).

Figs. 4 are perspective views schematically illustrating a shape of the rubber forming part 10. Fig. 4A shows a shape (target shape) of the rubber forming part 10 that is free of deformation and each of Figs. 4B to 4F shows shapes of the rubber forming part 10 that are subjected to deformation. Each of the marks (-X, +Y, +A, -B, -C, +D) of Figs. 4B to 4F shows a way the rubber forming part 10 is deformed.

As illustrated, when the rubber forming part 10 is formed by sintering, a distortion (warpage, twisting etc.) to the target shape (cf. Fig. 4A) is apt to be caused in the rubber forming part 10 (cf. Figs. 4B to 4F). In addition, the distortion of the rubber forming part 10 is apt to exceed a predetermined allowable tolerance (e.g., 0.1∼0.2mm). Particularly, in the powder laminate shaping, the distortion of the rubber forming part 10 is easily produced by repetition of the sintering, and it is difficult to control the distortion of the rubber forming part 10. Therefore, in the mold of the second embodiment, the shape of the rubber forming part 10 is corrected so as to produce the mold.

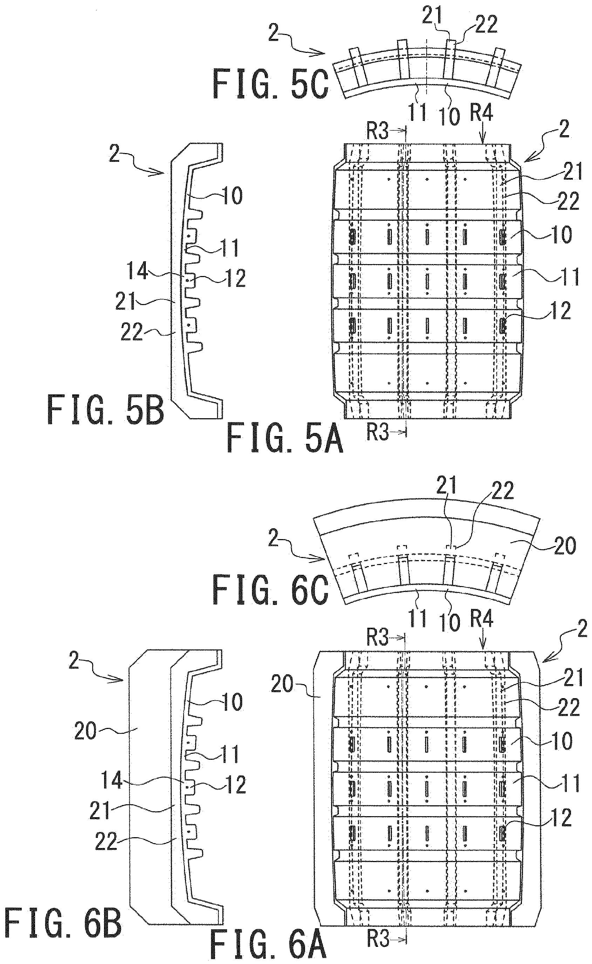

Figs. 5 are views illustrating a rubber forming part 10 of a mold 2 of the second embodiment, and Fig. 5A is a front view of the rubber forming part 10. Fig. 5B is a sectional view of the rubber forming part 10 taken along the line R3-R3 of Fig. 5A, and Fig. 5C is a plan view of the rubber forming part 10 viewed from the direction shown by the arrow R4 of Fig. 5A.

As illustrated, correcting parts 21 are provided on the cast-in part 14 of the rubber forming part 10 to correct the shape of the rubber forming part 10. The correcting part 21 is a correcting member formed in a rib form, and the correcting part 21 is located from one end to the other end of the cast-in part 14 and is fixed to the cast-in part 14 by welding. A plurality of the correcting parts 21 are arranged in parallel on the cast-in part 14 and project from the cast-in part 14. The correcting parts 21 are fixed to the cast-in part 14 while the rubber forming part 10 is pushed to the correcting parts 21

The correcting part 21 restricts the rubber forming part 10 while correcting the distortion of the rubber forming part 10 and thus corrects the shape of the rubber forming part 10 in a predetermined allowable shape. With this, size(s) of the rubber forming part 10 is corrected, so that the dimensional precision of the rubber forming part 10 is improved. In addition, the correcting part 21 has an undercut shape. The undercut shape is a slip prevention shape to prevent the correcting part 21 from slipping out of the holding part 20. The correcting part 21 is formed in an undercut shape so as to gradually thicken towards its projecting edges from its part on the cast-in part 14 side. The correcting part 21 has an undercut portion (undercut structure) 22 formed in an undercut shape and is cast in the holding part 20.

Figs. 6 are views illustrating the mold 2 of the second embodiment and illustrate the mold 2 like Figs. 5.
As illustrated, at the time of casting of the holding part 20, the cast-in part 14 of the rubber forming part 10 together with the correcting parts 21 is cast in the holding part 20 while the shape of the rubber forming part 10 is corrected by the correcting parts 21. The correcting parts 21 are embedded in the holding part 20 so as to be held by the holding part 20.

The shape of the rubber forming part 10 is corrected by the correcting parts 21, so that the shape and the dimensional precision of the rubber forming part 10 can be improved. In addition, the rubber forming part 10 is surely held by the holding part 20 since the correcting parts 21 is held by the holding part 20, so that the rubber forming part 10 can be prevented from slipping out of the holding part 20.
Therefore, the correcting part 21 can be effectively utilized for two purposes. The distortion of the rubber forming part 10 is reduced by correcting the rubber forming part 10, so that wastes of the rubber forming part 10 caused by the distortion can be reduced. Still further, at the time of forming the rubber forming part 10 by sintering, the correcting parts 21 may be formed integrally with the rubber forming part 10 so as to correct the shape of the rubber forming part 10 by the correcting parts 21.

### (The third embodiment)

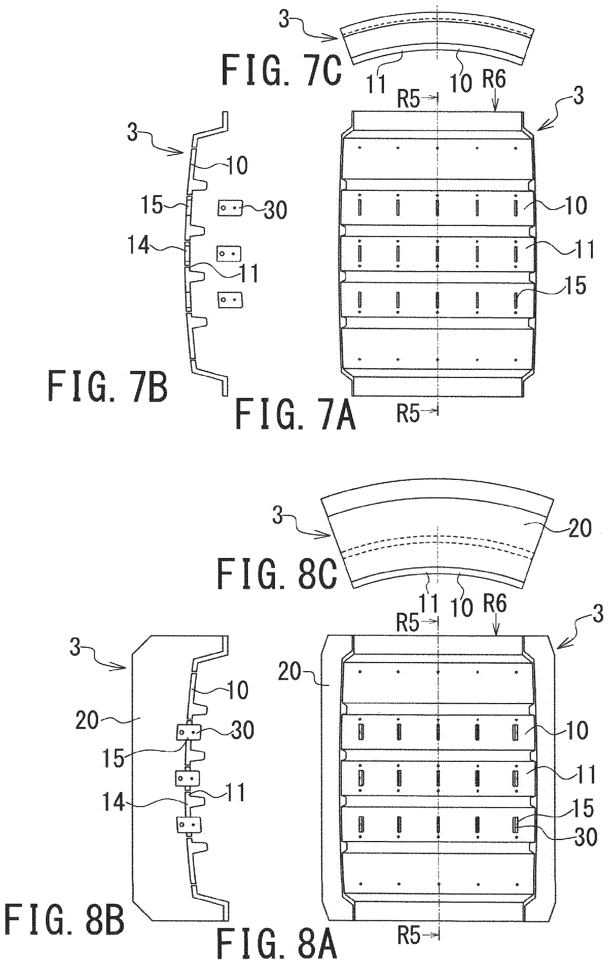

Figs. 7 are views illustrating a rubber forming part 10 of a mold 3 of the third embodiment, and Fig. 7A is a front view of the rubber forming part 10. Fig. 7B is a sectional view of the rubber forming part 10 taken along the line R5-R5 of Fig. 7A, and Fig. 7C is a plan view of the rubber forming part 10 viewed from the direction shown by the arrow R6 of Fig. 7A.

As illustrated, the rubber forming part 10 is formed similarly to the first embodiment. However, the rubber forming part 10 does not have any projection 12, but has a plurality of through-holes 15 instead of the projections 12. The through-hole 15 penetrates the rubber forming part 10 and opens to the contact part 11 and the cast-in part 14 of the rubber forming part 10.

The mold 3 is provided with a plurality of projecting members 30. Here, the projecting member 30 is a plate-like sipe blade, and is inserted in the through-hole 15 of the rubber forming part 10. The through-hole 15 is a holding hole to hold the projecting member 30, and through-hole 15 is formed into a shape corresponding to the shape of the projecting member 30 (here a slit shape) . At the time of forming the rubber forming part 10, the rubber forming part 10 which has the through-holes 15 is formed by sintering of the metal powder. In this way, the through-holes 15 for the projecting member 30 are formed in the rubber forming part 10. Subsequently, a plurality of the projecting members 30 are inserted in the through-holes 15 of the rubber forming part 10 and fitted in the through-holes 15, respectively. Each of the projecting members 30 projects from the openings of both ends of the through-hole 15 while it is held in the through-hole 15. In the state, the holding part 20 is cast, so that the projecting members 30 are cast in the holding part 20.

Figs. 8 are views illustrating a mold 3 of the third embodiment and illustrate the mold 3 like Figs. 7.

As illustrated, each of the projecting members 30 is held in the through-hole 15 of the rubber forming part 10 and projected from the contact part 11 and the cast-in part 14 of the rubber forming part 10. In the state, the cast-in part 14 of the rubber forming part 10 together with parts projected from the cast-in part 14 of the projecting members 30 is cast in the holding part 20. The projecting member 30 is projected from the cast-in part 14 towards the holding part 20 and is joined to the holding part 20 in the holding part 20. In addition, the projecting member 30 is fixed to the rubber forming part 10 and the holding part 20 and is projected from the contact part 11 of the rubber forming part 10.

By casting the projecting member 30 in the holding part 20, the projecting member 30 is strongly fixed to the rubber forming part 10 and the holding part 20, and the strength of the projecting member 30 can be improved. As a result, the breakage of the projecting member 30 is suppressed and thus the life time of projecting member 30 can be prolonged. Frequency in the replacement of the projecting member 30 can be decreased and thus the cost in the replacement can be reduced.

### (The fourth embodiment)

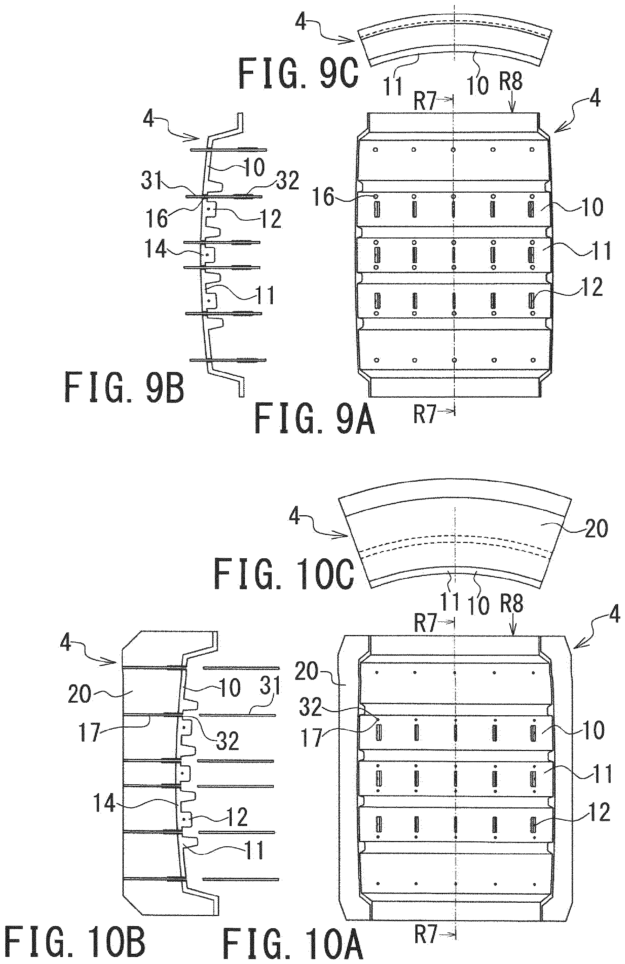

Figs. 9 are views illustrating a rubber forming part 10 of a mold 4 of the fourth embodiment, and Fig. 9A is a front view of rubber forming part 10. Fig. 9B is a sectional view of the rubber forming part 10 taken along the line R7-R7 of Fig. 9A, and Fig. 9C is a plan view of the rubber forming part 10 viewed from the direction shown by the arrow R8 of Fig. 9A.

As illustrated, the rubber forming part 10 is formed similarly to the first embodiment. The rubber forming part 10 has a plurality of through-holes 16. The through-hole 16 penetrates the rubber forming part 10 and opens to the contact part 11 of the rubber forming part 10 and the cast-in part 14.

At the time of forming the rubber forming part 10, the rubber forming part 10 having the through-holes 16 is formed by sintering of the metal powder. In this way, the through-holes 16 for vent hole are formed in the rubber forming part 10. The vent hole is a hole to exhaust an air between the contact part 11 and the tire outside the mold 4 at the time of the molding of the tire (at the time of vulcanization) . The through-hole 16 is at an end of the vent hole on the rubber forming part 10 side, and is formed into the shape corresponding to the shape of the vent hole (e.g., a circular shape, a slit shape) . Here, the vent hole and the through-hole 16 are circular holes and formed so as to extend in the thickness direction of the rubber forming part 10.

Before casting of the holding part 20, a plurality of wire rods 31 for molding vent hole are inserted in the through-holes 16 so as to be projected from the openings of both ends of the through-holes 16, respectively. The wire rod 31 is a linear member (e.g., piano wire, spring steel wire) which does not melt at the time of casting of the holding part 20. The length of the wire rod 31 is longer than the length of the vent hole.

A mold release agent is applied to the surface of the wire rod 31, and a mold release processing is given to the surface of the wire rod 31. By the mold release processing, joining of the wire rod 31 and the holding part 20 are prevented from joining at the time of casting of the holding part 20. In addition, the wire rod 31 is inserted in a vent tube 32, so that the vent tube 32 is fit on the wire rod 31. The vent tube 32 is, for example, a tube of steel, and is fit in the through-hole 16 of the rubber forming part 10 so as to be projected from the cast-in part 14 of the rubber forming part 10.

The wire rod 31 and the vent tube 32 are inserted in the through-hole 16 of the rubber forming part 10 and then the wire rod 31 is temporarily jointed to the rubber forming part 10 by a temporary joint processing (e.g., adhesion at points). The wire rod 31 is disposed in the through-hole 16 and is projected from both the contact part 11 and the cast-in part 14 of the rubber forming part 10. In the state, the cast-in part 14 of the rubber forming part 10 together with the wire rod 31 projected from the cast-in part 14 is cast in the holding part 20. The end of the wire rod 31 opposed to the rubber forming part 10 is positioned outside the holding part 20, and the wire rod 31 is projected from the rubber forming part 10 and the holding part 20. The vent tube 32 is projected from the cast-in part 14 towards the holding part 20 and is joined to the holding part 20 in the holding part 20. In this way, the vent tube 32 is fixed to the rubber forming part 10 and the holding part 20.

Figs. 10 are views illustrating a mold 4 of the fourth embodiment and illustrate the mold 4 like Figs. 9.
As illustrated, after casting of the holding part 20, the wire rods 31 are pulled out from the rubber forming part 10 and the holding part 20, and the vent hole 17 is formed in the mold 4. In the mold 4, a part in which the wire rod 31 was occupied becomes to be the vent hole 17. The vent hole 17 penetrates the holding part 20 and the rubber forming part 10 and opens to the contact part 11 of the rubber forming part 10. The mold 4 comprises a plurality of the vent holes 17 formed by using the wire rods 31. Each of a plurality of the vent tubes 32 is fixed in each of the vent hole 17 to the rubber forming part 10 and the holding part 20.

By using the wire rods 31, the vent holes 17 can be easily formed in the mold 4.

In addition, it is not necessary to perform a processing to form the vent holes 17 after casting of the holding part 20, and then man-hours for forming the vent holes 17 can be reduced. As a result, the production time and the cost of the mold 4 can be reduced.

### (The fifth embodiment)

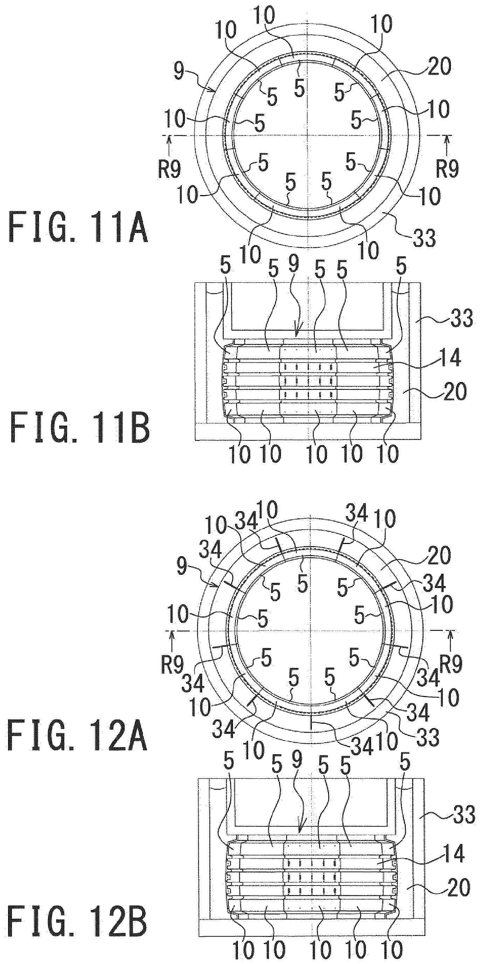

Figs. 11 are views illustrating a method for producing molds 5 of the fifth embodiment. Fig. 11A is a sectional view of the molds 5 in producing viewed from above. Fig. 11B is a sectional view of the molds 5 (except for the rubber forming parts 10) taken along the line R9-R9 of Fig. 11A and shows the rubber forming parts 10 only by a side view.

As illustrated, the mold 5 is a part of a ring-shaped mold assembly 9 for molding a tire. A plurality of the molds 5 are located along a circumferential direction and assembled into a ring shape so as to constitute the mold assembly 9. The mold assembly 9 molds a tire by the rubber forming parts 10 of the plurality of the molds 5 located on the inner peripheries side thereof.

Before casting of the holding part 20, the rubber forming parts 10 of the plurality of the molds 5 are preliminarily assembled into a ring shape and located in a casting flask 33. In the state, the holding parts 20 of the plurality of the molds 5 are cast in the casting flask 33 at the same time, and the cast-in parts 14 of the plurality of the rubber forming parts 10 are cast in the holding parts 20 at the same time. The plurality of the cast-in parts 14 are outer peripheries of the plurality of the rubber forming parts 10 and are located into a ring shape. The plurality of the holding parts 20 are formed around the plurality of the rubber forming parts 10 into a ring shape and surround the plurality of the cast-in parts 14.

After casting of the holding parts 20, the plurality of the molds 5 are taken out of the casting flask 33. If there exist any distortion in the plurality of the molds 5, shapes of the plurality of the molds 5 are corrected by deforming the plurality of the molds with an external force. In this way, a size of the plurality of the molds 5 is corrected. In addition, the plurality of the molds 5 are attached to a processing machine and the ring-shaped holding parts 20 of the plurality of the molds 5 are processed at one time. For example, the plurality of the holding parts 20 is processed into a predetermined external shape by a lathe processing.

Thereafter, the plurality of the molds 5 are divided in the circumferential direction by a division processing so that the plurality of the molds 5 is produced. For example, the holding parts 20 are cut by a wire cut (electric-discharge machining) so that the plurality of the molds 5 is divided. Otherwise, the holding parts 20 are cut from the outer peripheries thereof to the vicinity of the rubber forming parts 10 by cutting work (spot facing) using an end mill so that the plurality of the molds 5 are divided.

In this way, in the fifth embodiment, the plurality of the molds 5 can be effectively produced, so that man-hours for producing the molds 5 can be reduced. As the result, the production time and the cost of the plurality of the mold 5 can be reduced. In addition, like the molds 5 (tread molds), a mold (two pieces mold) which is divided in two in the tire width direction can be produced. In this case, a plurality of the rubber forming parts constituting the mold are assembled into a ring shape, and the plurality of the rubber forming parts are held by one holding part.

Figs. 12 are views illustrating other method for producing the mold 5 of the fifth embodiment and illustrate the mold 5 like Figs. 11.

As illustrated, when the plurality of the rubber forming parts 10 are formed into a ring shape, partition members 34 are tucked between the rubber forming parts 10. The partition member 34 is a plate-shaped member (partition plate) . As well as the wire rod 31, a mold release processing is given to the surface of the partition member 34. The partition member 34 is projected from the cast-in part 14 of the rubber forming part 10 so as to partition off a space between the plurality of the rubber forming parts 10 and the casting flake 33. In this way, casting spaces of the holding parts 20 of the plurality of the molds 5 are partitioned off at each of the holding parts 20. In the state, the holding parts 20 of the plurality of the molds 5 are cast in the casting flake 33 at the same time, and the cast-in parts 14 of the plurality of the rubber forming parts 10 are cast in the holding parts 20.

Thereafter, the plurality of the molds 5 are produced by dividing the plurality of the molds 5. For example, the holding parts 20 are cut from the outer peripheries thereof to the partition members 34 by cutting work using the end mill so that the plurality of the molds 5 are divided. Otherwise, the holding parts 20 are cut from the outer peripheries thereof to the partition members 34 by the wire cut so that the plurality of the molds 5 are divided. After the division of the plurality of the molds 5, the partition members 34 are removed from the molds 5. By the partition members 34, the plurality of the molds 5 are easily divided.

Still further, the rubber forming part 10 of the mold 5 may be the rubber forming part 10 of any one of the molds 1-4 of the first to fourth embodiments. In addition, the methods for producing the molds 1-5 of the first to fifth may be implemented in their arbitral combination.

As described above, the plurality of the embodiments have been explained, taking the example that the rubber article is a tire, but the rubber article is not limited to the tire, may be other rubber article. The rubber article is an article made of rubber molded by a mold, for example, an article made of only rubber or an article made of rubber and other materials.

### (Production test of the mold)

For confirmation of the effect of the present invention, the molds were produced by the production methods explained above and the various tests were performed. Results of the tests (the first to fourth tests) will be sequentially explained.

### (The first test)

The mold 2 (cf. Figs. 5 and Figs. 6) was produced by the production method of the second embodiment and the heat transfer characteristic of the mold 2 was evaluated. On the occasion, the rubber forming part 10 made of stainless steel (Japanese Industrial Standards: SUS304) was formed by the powder laminate shaping, using the laser. The shape of the rubber forming part 10 is a shape of a piece of a ring (inside diameter: ϕ 600 mm, overall height: 250 mm, minimum thickness: 3 mm) divided into nine. The rubber forming part 10 has approximately 140 projections 12 (sipe blade, thickness: 0.4 mm, width: 10 mm, height: 10 mm) . The projections 12 were directly formed on the rubber forming part 10.

Four correcting parts 21 (projecting height: 10 mm, thickness : 10 mm) were joined to the cast-in part 14 of the rubber forming part 10 by welding, so that the shape of the rubber forming part 10 was corrected by the four correcting parts 21. The cast-in part 14 of the rubber forming part 10 was surrounded by the casting flask and then the holding part 20 (thickness: 50 mm) made of aluminum alloy (Japanese Industrial Standards: AC4C) was cast in the casting flask. Thereafter, the external shape of the holding part 20 was formed by machining and the vent holes (diameter: ϕ 1.6 mm) were formed in the mold 2.

In the mold 2, adhesion between the rubber forming part 10 and the holding part 20 was good, so that a heat transfer characteristic equivalent to that of a cast mold made of an aluminum alloy was obtained. In contrast, in the mold of the comparative example, a holding part was formed by machining, the rubber forming part 10 was fitted in the holding part and the rubber forming part 10 was fixed to the holding part by a screw. In the mold of the comparative example, adhesion between the rubber forming part 10 and the holding part was poor, so that a heat transfer characteristic was lowered than the heat transfer characteristic of the mold 2.
When a tire was vulcanized on the same condition by mold 2 and the mold of the comparative example, a time (vulcanization time) required for completion of the vulcanization of the tire with the mold of the comparative example was longer than the vulcanization time with the mold 2 by 2-3 minutes. From these results, it was found that the heat transfer characteristic is improved by the mold 2. In addition, it was found that the heat transfer characteristic is improved even the mold 1 of the first embodiment (cf. Figs. 1 and Figs. 2) .

### (The second test)

The mold 3 (cf. Figs. 7 and Figs. 8) was formed by the production method of the third embodiment and the strength of the projecting members 30 (sipe blades) were evaluated. On the occasion, the rubber forming part 10 was formed by the powder laminate shaping, like the rubber forming part 10 in the first test. However, the projections 12 were not formed on the rubber forming part 10, but the slit-shaped through-holes 15 for the projecting members 30 were formed on the rubber forming part 10. In addition, the projecting members 30 made of stainless steel (Japanese Industrial Standards: SUS301 (1/2H)) were fitted in the through-holes 15 so that the projecting members 30 are projected from the cast-in part 14 of the rubber forming part 10. The projecting length of the projecting member 30 is 5mm. In the state, the holding part 20 was cast, so that the mold 3 was produced.

In these tests, the tire was repeatedly molded with the mold 2 in the first test and the mold 3 in the second test, and the number of usable frequency (life time) of the projections 12 of the mold 2 and the projection members 30 of the mold 3 were investigated. As a result, a breakage was caused in the projection 12 that was near to the end of the mold 2 when the tires were molded approximately 2,000 times with the mold 2 produced in the first test. In contrast, no breakage was caused in the projecting member 30 even when the tires were molded approximately 20, 000 times with the mold 3 produced in the second test. In this way, it was found that in the mold 3, the strength of the projecting member 30 is improved and that the life time of the projecting member 30 is elongated.

### (The third test)

At the time of forming the rubber forming part 10 in the second test, the through-holes 16 for vent hole were formed on the rubber forming part 10 like the mold 4 (cf. Figs. 9 and Figs. 10) of the fourth embodiment. In addition, a mold release processing was given to the wire rods 31 (diameter: ϕ 1.1 mm, length: 70 mm, materials: piano wire), and then the wire rods 31 were inserted inside of the vent tubes 32 (outer diameter: 3 mm, inside diameter: 1.2 mm, length: 20 mm). The wire rods 31 and the vent tube 32 were inserted in the through-holes 16 so that the wire rods 31 were temporarily jointed to the rubber forming part 10. Thereafter, the holding part 20 made of aluminum alloy (Japanese Industrial Standards: AC4C) was cast so that the mold was produced.

The wire rods 31 were pulled out of the rubber forming part 10 and the holding part 20, so that approximately 1,000 vent holes 17 were formed in the mold. The forming time of the vent holes 17 in this way was shortened by almost ten hours in comparison with the forming time when the vent holes 17 were formed by machining. It was found that the vent holes 17 can be easily formed by using the wire rods 31.

### (The fourth test)

The mold 5 (cf. Figs. 12) was produced by the production method of the fifth embodiment and the production efficiency of the mold 5 was investigated. On the occasion, nine rubber forming parts 10 were assembled into a ring shape and the partition members 34 were tucked between the rubber forming parts 10. The partition member 34 is a plate-shaped member (thickness: 0.6 mm, Japanese Industrial Standards: SUS631)). The mold release agent (thickness: approximately 30 µm) was applied to the surfaces of the partition members 34 so that the mold release processing was given to the surfaces of the partition members 34. The plurality of the rubber forming parts 10 in the ring shape was located in the casting flask 33 and then the holding part 20 was cast.

The plurality of the molds 5 were taken out of the casing flask 33 and correction devices (e.g., expanders) were located inside the plurality of the molds 5. By the correction devices, diameters of the plurality of the molds 5 on both sides in the width direction of the plurality of the molds 5 were partially increased so that shapes of the plurality of the molds 5 were corrected. Subsequently, the holding parts 20 of the plurality of the molds 5 were processed so that the plurality of the molds 5 was produced. In the mold 5, processing time of the holding part 20 was shortened by almost five hours in comparison with the mold 4 in the third test. It was found that the plurality of the molds 5 is effectively produced and thus man-hours for producing of the molds 5 can be reduced.

### (The method for producing mold member, the mold member)

Next, the method for producing mold member of the present invention and the embodiment of the mold member will be described with reference to drawings.

The mold member of the embodiment (the sixth to ninth embodiments) is a member used for a mold (member for mold) and is produced by the method for molding mold member of this embodiment. In addition, the mold member is the whole or a part of the mold. For example, the mold member is a mold main body of the mold, a part of the mold main body or parts of the mold attached to the mold main body. The mold main body is the main part of the mold and molds a rubber article.

Here, the method for producing mold member and a plurality of embodiments of the mold members will be described by taking an example that the mold is a mold for tire. For example, when a tread part of the tire is molded by the mold, a tread pattern is molded on the tread part by the mold main body of the mold or sipes are molded on the tread part by the sipe blades of the mold.

### (The sixth embodiment)

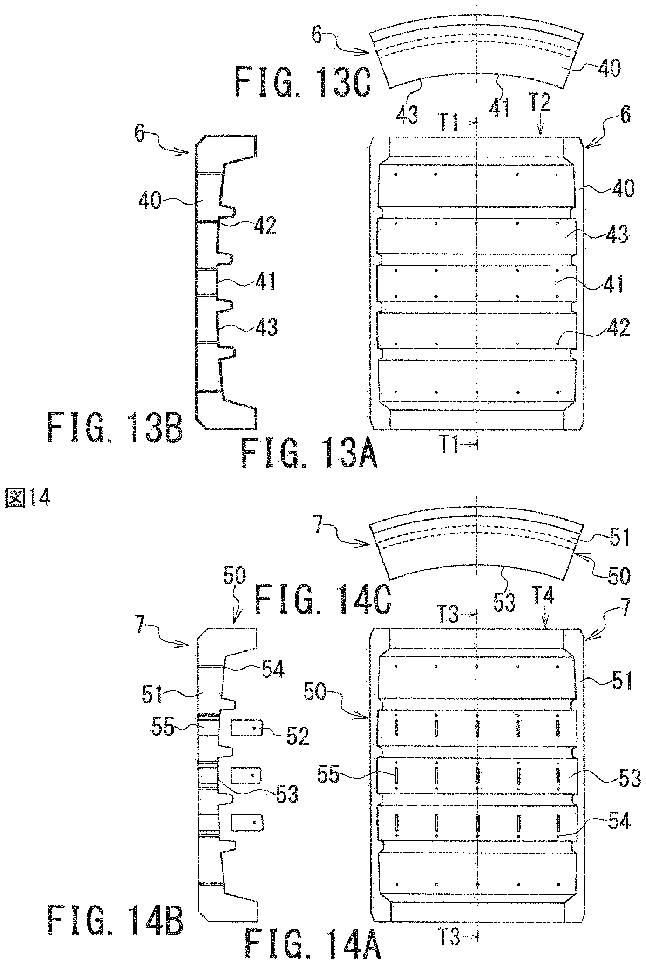

Figs. 13 are views illustrating a mold member 40 used for a mold 6 of the sixth embodiment, and Fig. 13A is a front view of the mold member 40. Fig. 13B is a sectional view of the mold member 40 taken along the line T1-T1 of Fig. 13A, and Fig. 13C is a plan view of the mold member 40 viewed from the direction shown by the arrow T2 of Fig. 13A.

As illustrated, the mold 6 is a tread mold to mold a tread part of the tire and is formed into a shape (sector shape) of plural circumferentially divided pieces of a ring-shaped member . A plurality of the molds 6 are assembled into a ring form, and then the tread part of the tire is molded by forming parts 41 formed on inner peripheries side of the plurality of the molds 6. The mold member 40 is a main body of the mold 6 (mold main body) and the mold 6 consists of one mold member 40.

The mold member 40 has the forming part 41 which is in contact with a rubber article to mold the rubber article, and a plurality of vent holes 42. Here, the forming part 41 of the mold member 40 is a tread forming part to mold a tread part of the tire, and is formed in the shape corresponding to the tread pattern of the tire. The vent holes 42 open to the forming part 41 and penetrate the mold member 40. At the time of the vulcanization of the tire, the mold 6 (mold member 40) comes into contact with the tread part of the tire and molds the tread pattern on the tread part of the tire by the forming part 41.

At the time of producing the mold member 40, the mold member 40 is formed into a basic shape, a plating (plating treatment) is applied to the surface of the mold member 40 and the mold member 40 is formed into the finishing shape. Specifically, the mold member 40 is formed to be in a state preceding the plating and thus the mold member 40 is produced. For example, the mold member 40 is made of aluminum alloy and is formed to be in a state preceding the plating (shape before the plating) by machining or casting. In this way, an external shape of the mold member 40 is formed, namely the mold member 40 is formed to be in a state for plating (shape for plating) . The part to be plated of the mold member 40 is formed into a smaller size than that of the finishing shape by the thickness of the plating (plating film 43).

Subsequently, the surface of the mold member 40 after the formation is plated by a plating treatment, so that the plating film 43 is formed on the surface of the mold member 40 and thus the surface of the mold member 40 is coated with the plating film 43. The plating film 43 is a plating layer of the predetermined thickness. The mold member 40 has the plating film 43 coating the whole or a part of the surface thereof. Here, the whole surface of the mold member 40 is plated so that the whole surface of the mold member 40 is coated with the plating film 43. In addition, the plating is iron plating, and the plating film 43 is an iron plating film. By the iron plating, the plating film 43 of iron or iron alloy is formed. The thickness of the plating film 43 is 10∼100µm.

By plating the surface of the mold member 40, the mold member 40 is simply and easily strengthened so that the strength of the mold member 40 can be improved. In addition, the mold member 40 can be simply and easily strengthened even if the mold member 40 is formed under the condition that it is easily formed, or by materials that it is easily formed. Therefore, an increase of the production time and the cost of the mold member 40 can be suppressed.

The surface of the mold member 40 can be strengthened and corrosion resistance of the mold member 40 can be improved by the plating film 43. With this, the mold member 40 can be cleaned by using a cleaning technique of high erosive property (sandblast etc.) at the time of cleaning to remove dirt (adhered rubber etc.) of the mold member 40. Even when a minute design shape (scribe line, minute letter etc.) exist on the surface of the mold member 40, the design shape can be prevented from the damage due to the cleaning. In addition, even when the mold member 40 is cleaned by chemical cleaning, corrosion of the mold member 40 can be prevented

Since the surface of the mold member 40 becomes smooth by the plating film 43, the stress concentration by the surface unevenness is alleviated and thus the strength of all parts of the mold member 40 can be surely improved. In addition, at the time of the vulcanization of the rubber article (here a tire), the mold member 40 and other members are closely adhered together, and thus the heat transfer loss between the members decreases. As the result, since heat is effectively transmitted through the contact surfaces of the members, the vulcanized time of the tire can be shorten.

Still further, where the plating applied to the mold member 40 is nickel plating or copper compound metal plating, a close adhesion between the rubber of the tire and the plating film 43 is likely to be caused by a reaction of the rubber and the plating at the time of the vulcanization of the tire. In addition, when the plating is chromic plating, the cost of the plating treatment is increased, and a cracking of the plating film 43 is likely to be occurred where the plating film 43 is made thick. Therefore, it is more preferable to apply the iron plating to the mold member 40.

When the plating is the iron plating, the close adhesion between the rubber of the tire and the plating film 43 can be prevented at the time of the vulcanization of the tire. In addition, the plating to the mold member 40 can be easily performed, and the cracking of the plating film 43 is suppressed, too. The cost of the plating treatment can be reduced, too. In addition, since the corrosion resistance to the alkali of the mold member 40 is increased, the mold member 40 can be cleaned by an alkaline solution

When the thickness of the plating film 43 is thinner than 10 µm, enough corrosion resistance thereof is hard to be obtained. In addition, when the thickness of the plating film 43 is thicker than 100 µm, the precision of the design shape of the mold material 40 is likely to be influenced, together with that processing time of the plating treatment is elongated. For example, when the plating film 43 becomes thick, rounding of the corner of the design shape is occurred, and a lump is formed in the design shape or the wall thickness of the design shape becomes non-uniform. Therefore, as for the thickness of the plating film 43, it is more preferable to be 10∼100 µm. In this way, enough corrosion resistance is obtained by the plating film 43 and the influence on the design shape is hard to be effected.

Next, a method for producing mold member and a mold member of another embodiment is described. Basically, the method for producing mold member of another embodiment is similarly constituted with the method for producing the mold member of the sixth embodiment and exhibits a similar effect. Therefore, in the following, a matter differing from the matter which has been described is described and the description of the matter the same as the matter which has been already described is omitted.

### (The seventh embodiment)

Figs. 14 are views illustrating a mold member 50 used for a mold 7 of the seventh embodiment and Fig. 14A is a front view of the mold member 50. Fig. 14B is a sectional view of the mold member 50 taken along the line T3-T3 of Fig. 14A, and Fig. 14C is a plan view of the mold member 50 viewed from the direction shown by the arrow T4 of Fig. 14A.

As illustrated, the mold 7 is a tread mold 3 like the mold 6 of the sixth embodiment and consists of the mold member 50.

The mold member 50 is comprised of a mold main body 51 of the mold 7 and fixing members 52 fixed to the mold main body 51. The mold main body 51 has a forming part 53 and a plurality of vent holes 54 like the mold member 40 of the sixth embodiment. In addition, the mold main body 51 has a plurality of insertion parts 55. The plurality of the fixing members 52 are inserted in the insertion parts 55, respectively. The insertion part 55 is a slit (or a long hole) penetrating the mold main body 51 and opens to the forming part 53 of mold main body 51.

A part of the fixing member 52 is inserted in the insertion part 55 so that the fixing member 52 is attached to the mold main body 51. Here, the fixing member 52 is projecting member (e.g., thin plate-shaped member, protrusion) projected from the forming part 53. In addition, the fixing member 52 is a plate-shaped sipe blade for molding a sipe on a tire and is implanted in the mold main body 51 by being inserted in the insertion part 55.

At the time of producing the mold member 50, each of the mold main body of 51 and the fixing members 52 is formed. The mold main body 51 and the fixing members 52 are combined together so that a basic shape of the mold member 50 is formed. Next, plating (here, iron plating) is applied to the surface of the mold member 50 and the mold member 50 is formed into the finishing shape. Specifically, the mold main body 51 is formed to be in a state proceeding to the plating like the mold member 40 of the sixth embodiment and thus the mold member 50 is produced. In addition, the fixing members 52 are attached to the mold main body 51 and thereafter the mold member 50 comprised of the mold main body 51 and the fixing members 52 is formed to be in a state preceding the plating. On this occasion, a part of the fixing member 52 is inserted in the insertion part 55. The fixing member 52 is temporarily jointed to the mold main body 51 by temporary joint processing (e.g., adhesion at points) while the fixing member 52 is projected from the forming part 53.

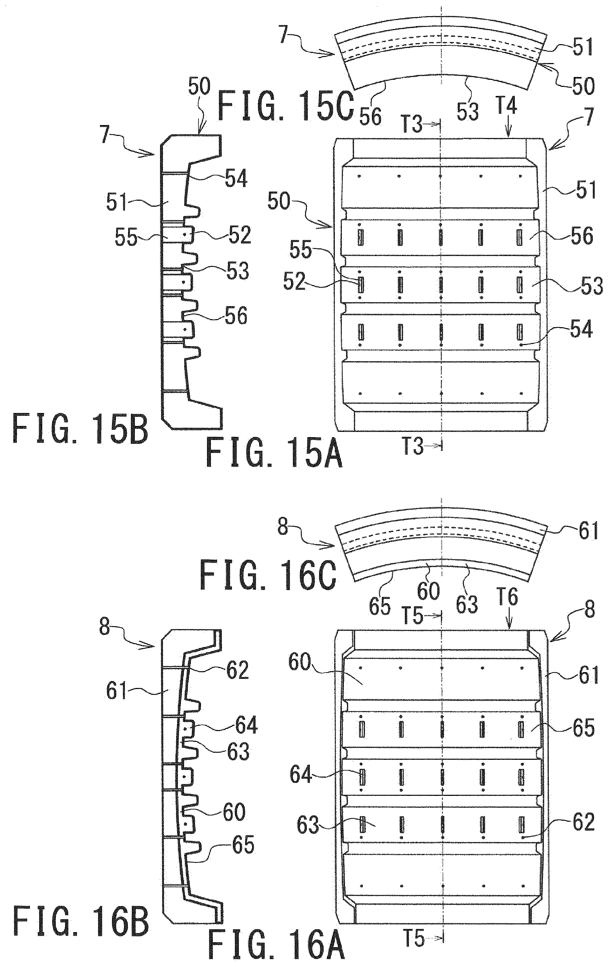

Figs. 15 are views illustrating the mold member 50 of the seventh embodiment and illustrate the mold member 50 like Figs. 14.
As illustrated, the surface of the mold member 50 after the formation of the mold member 50 is plated so that a plating film 56 is formed on the surface of the mold member 50.
The plating film 56 is coated on the surfaces of the mold main body 51 and the fixing members 52 by plating the surfaces of the mold main body 51 and the fixing members 52 and are joined and fixed to the mold main body 51. The thickness of the plating film 56 is 10∼100 µm. The plating film 56 covers the contact parts of the fixing member 52 and the mold main body 51, and is formed in the gap between the fixing member 52 and the mold main body 51, in the insertion parts 55.

By applying the plating to the surfaces of the mold member 50, the fixing member 52 is strongly fixed to the mold main body 51. With this, the fixing member 52 can be simply and easily fixed to the mold main body 51 without performing the fixing work (e.g., welding, caulking, pinning) of the fixing member 52.
In addition, the strength of a part that is easily broken at the time of the molding of the tire can be surely increased. Therefore, the mold member 50 can be simply and easily strengthen so that the strength of the mold member 50 can be improved. The man-hours for production and the cost of the mold member 50 can be reduced, too.

### (The eighth embodiment)

Figs. 16 are views illustrating a mold 8 of the eighth embodiment and Fig. 16A is a front view of the mold 8. Fig. 16B is a sectional view of the mold 8 taken along the line T5-T5 of Fig. 16A, and Fig. 16C is a plan view of the mold 8 as viewed from the direction shown by the arrow T6 of Fig. 16A.

As illustrated, the mold 8 is a tread mold like the mold 6 of the sixth embodiment and has a mold member 60, a holder 61 and a plurality of vent holes 62. The mold member 60 is attached to the holder 61 so as to be held by the holder 61.

The mold member 60 is a rubber forming part of the mold 8 molding a rubber article, and has a contact part 63 to be in contact with the tire which is the rubber article and projections 64 formed on the contact part 63. The mold member 60 is a surface layer part on the rubber article side of the mold 8, and a plurality of the projections 64 are projected from the contact part 63. In addition, the projection 64 is a plate-shaped sipe blade to mold a sipe on the tire, and is integrally formed with the contact part 63. The vent holes 62 open to the contact part 63 of the mold member 60 and penetrate both the mold member 60 and the holder 61.

At the time of producing the mold member 60, the mold member 60 is formed into a basic shape by the powder laminate shaping, then, plating (here, iron plating) is applied to the surface of the mold member 60 and the mold member 60 is formed into the finishing shape. In the powder laminate shaping, a powder layer (e.g., metal powder) of the predetermined thickness is formed, the powder layer is irradiated by a light beam (e.g., a laser) and the powder is sintered by the heat of the light beam. In this way, the powder is cured and thus a cured layer (the sintered layer) made of sintered powder is formed. In addition, the formation of the powder layer and the formation of the sintered layer are repeated and a plurality of the sintered layers is sequentially laminated and thus the mold member 60 is shaped into a three-dimensional shape.

In this way, the cured layers that are made of cured powder are laminated, so that the mold member 60 is shaped by the powder laminate shaping. In this way, the mold member 60 is formed to be in a state (shape) preceding the plating and thus the mold member 60 is produced. Subsequently, the surface of the mold member 60 after the formation is plated so that a plating film 65 is formed on the surface of the mold member 60 and thus the surface of the mold member 60 is coated with the plating film 65. The thickness of the plating film 65 is 10∼100 µm. The whole surface of the mold member 60 is plated. Thereafter, the mold member 60 after the production is attached to the holder 61, so that the mold 8 is produced.

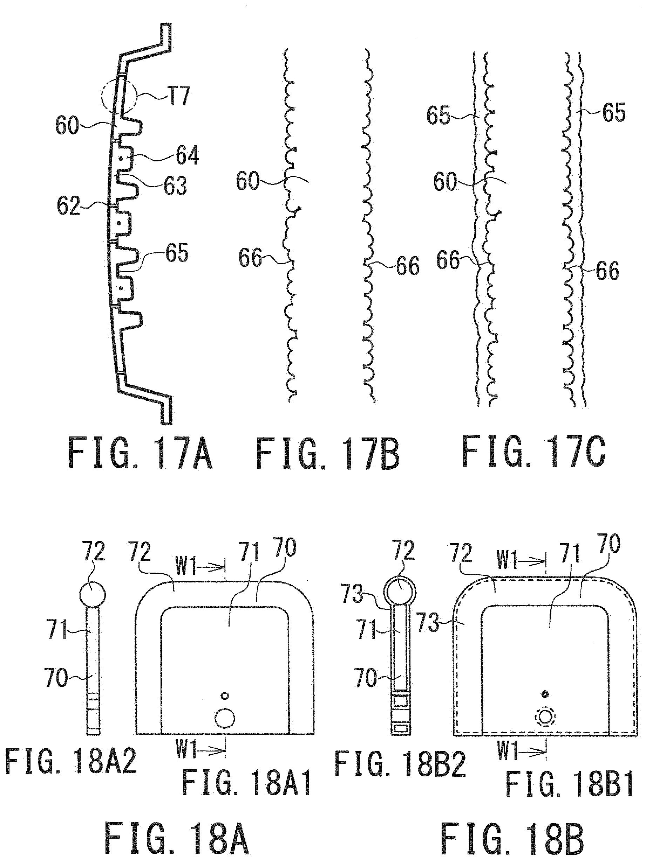

Figs. 17 are sectional views illustrating the mold member 60 of the eighth embodiment. Fig. 17A illustrates the mold member 60 corresponding to that shown in Fig. 16B, and Fig. 17B and Fig. 17C schematically illustrate T7 part shown in Fig. 17A. Fig. 17B illustrates the mold member 60 before plating and Fig. 17C illustrates the mold member 60 after plating.

As illustrated, when the mold member 60 is formed by the powder laminate shaping, shapes of the powder are left on the surface 66 of the mold member 60 (cf. Fig. 17B). According to size of the powder, the roughness of the surface 66 is relatively large. In addition, because the powders are not completely connected each other on the surface 66 of the mold member 60, the unevenness of the surface 66 is relatively large. Therefore, voids are generated between the mold member 60 and the holder 61 at the contact surfaces of the mold member 60 and the holder 61. The voids space corresponds to the recesses of the surface 66.

By the voids between the holder 61 and the mold member 60, the loss of the heat transfer from the holder 61 to the mold member 60 is increased. Therefore, the raising speed of temperature of the mold member 60 slows down, so that the vulcanized time of the rubber article (here a tire) is prolonged. In contrast, when the surface 66 of the mold member 60 is plated (cf. Fig. 17C), the recesses of the surface 66 of the mold member 60 are filled with the plating film 65. In addition, the surface 66 becomes smooth, and thus the roughness of the surface 66 is reduced. As the result, since the mold member 60 and the holder 61 are closely adhered to each other, the heat is effectively transmitted from the holder 61 to the mold member 60, and thus the heat transfer loss between them decreases. In this way, since the rising speed of temperature of the mold member 60 is increased, the vulcanized time for tire is shortened, and thus the productivity of the tire production is increased.

In addition, by the plating film 65, the stress concentration by the surface unevenness is alleviated and thus the mold member 60 can be strengthened. Therefore, by plating, the mold member 60 is simply and easily strengthened and thus the strength of the mold member 60 can be improved. Especially, since the strength of the projection 64 is improved, the breakage of the projection 64 is suppressed and thus the life time of the mold member 60 is prolonged. Therefore, the frequency in the exchange of the projection 64 is reduced and thus the cost in changing thereof can be reduced.

By the powder laminate shaping, the mold member 60 having a complicated shape can be simply and easily formed. In addition, the mold member may be a mold member without sipe blade. By the powder laminate shaping, the sipe blade or the mold main body may be formed as a mold member. In this case, the sipe blade or the mold main body after the formation is strengthened by plating.

### (The ninth embodiment)

Figs. 18 to Figs. 20 are views illustrating mold members 70, 80, 90 of the ninth embodiment and illustrate examples of three mold members 70, 80, 90. The three mold members 70, 80, 90 will be sequentially explained as follows.

Fig. 18A illustrates the mold member 70 before plating and Fig. 18B illustrates the mold member 70 after plating. Fig. 18A2 is a sectional view of the mold member 70 taken along the line W1-W1 of Fig. 18A1, and Fig. 18B2 is a sectional view of the mold member 70 taken along the line W1-W1 of Fig. 18B1.

As illustrated, the mold member 70 is a fixingmember (Here, sipe blade which is a projecting member) fixed to the mold main body of the mold like the fixing member 52 of the seventh embodiment and is used for the mold together with the mold main body. In addition, the mold member 70 has a plurality of parts 71, 72. The plurality of parts 71, 72 comprises a rectangular plate-shaped member (first part 71) and a rod member (second part 72) located along the edge of the first part 71, respectively.

At the time of producing the mold member 70, the mold member 70 comprised of the plurality of the parts 71, 72 is formed into a basic shape, plating (here, iron plating) is applied to the surface of the mold member 70 and the mold member 70 is formed into the finishing shape.

Specifically, the plurality of the parts 71, 72 of the mold member 70 are assembled so that the mold member 70 is formed to be in a state preceding the plating (cf. Figs. 18). On this occasion, the plurality of the parts 71, 72 are temporarily jointed to each other by temporary joint processing (e.g., adhesion at points, welding at points) so as to produce the mold member 70.

Subsequently, the surface of the mold member 70 after the formation is plated (cf. Fig. 18B) so that a plating film 73 is formed on the surface of the mold member 70. By applying the plating to the surfaces of the plurality of the parts 71, 72 after the assembling, the surface of the mold member 70 is coated with the plating film 73 and the plurality of the parts 71, 72 are joined to each other and thus integrated by plating. The whole surface of the mold member 70 is plated. The plating film 73 covers the contact points of the plurality of the parts 71, 72, and is also formed in the gap between the parts 71, 72. Thereafter, the mold member 70 after the production is fixed to the mold main body, so that the mold is produced.

The plurality of the parts 71, 72 of the mold member 70 can be strongly joined by plating. Therefore, the mold member 70 is simply and easily strengthened and thus the strength of the mold member 70 can be improved. In addition, the mold member 70 can be simply and easily produced from the plurality of the parts 71, 72 even if a shape of the mold member 70 is complicated. Therefore, the production cost of the mold member 70 can be reduced.

With respect to the materials of the plating, it is more preferable to apply plating which is cured by heating to the surface of the mold member 70. For example, when the materials of the plating are iron containing nitrogen, the plating is cured by heating to the predetermined curing temperature, and thus the hardness of the plating film 73 is raised. After having formed the plating film 73 which is cured by heating on the surface of mold member 70, the mold member 70 is heated and thus cured. Here, when the mold main body is molded by casting, the mold member 70 is cast in the mold main body so that the mold member 70 is fixed to the mold main body. At the time of the casting of the mold main body, the mold main body is cast in a casting mold while the mold member 70 is attached to the casting mold. In this way, a part of the mold member 70 is cast in the mold main body.

At the time of the casting of the mold main body, the plating film 73 is heated and thus cured. Therefore, the mold member 70 can be simply and easily strengthened and thus the strength of the mold member 70 can be more improved. In addition, the mold member 70 of which strength is high can be simply and easily produced without using any material of high strength for the parts 71, 72. The complicated mold member 70 can be simply and easily formed. In addition, the plating which is cured by heating maybe applied to a mold member consisting of one part. For example, by applying the plating to the mold member which is formed of one board or to the mold member which is formed by the powder laminate shaping, the mold member can be surely strengthened.

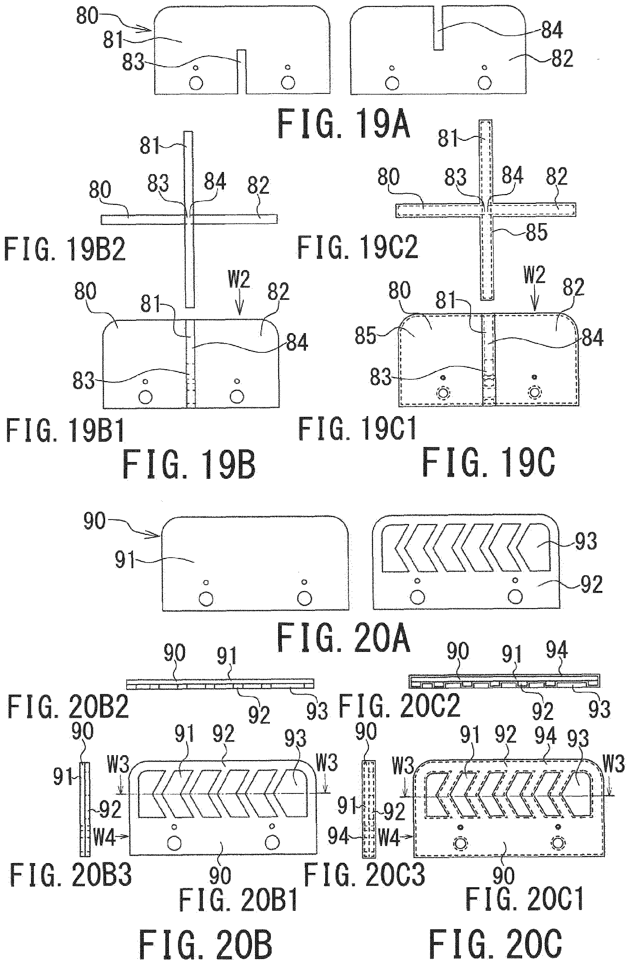

Fig. 19A is a view illustrating a plurality of parts 81, 82 of a mold member 80 before assembling. Fig. 19B is a view illustrating the mold member 80 after assembling (before plating) and Fig. 19C is a view illustrating the mold ember 80 after plating. Fig. 19B2 is a plan view of the mold member 80 viewed from the direction shown by the arrow W2 of Fig. 19B1, and Fig. 19C2 is a plan view of the mold member 80 viewed from the direction shown by the arrow W2 of Fig. 19C1.

As illustrated, the mold member 80 is a fixing member which is fixed to the mold main body like the mold member 70 and has a plurality of parts 81, 82. The plurality of parts 81, 82 is rectangular plate-shaped members (cf. Fig. 19A) having cuts 83, 84, respectively.

The mold member 80 is formed like the mold member 70. Specifically, the plurality of the parts 81, 82 of the mold member 80 are assembled so that the mold member 70 is formed to be in a state preceding the plating (cf. Fig. 19B) . On this occasion, the plurality of the parts 81, 82 are inserted in the cuts 83, 84 of their counterparts, so as to be assembled in a cross shape. In addition, the plurality of the parts 81, 82 are temporarily jointed to each other by temporary joint processing so that the mold member 80 is produced.

Subsequently, the surface of the mold member 80 after the formation is plated so that a plating film 85 is formed on the surface of the mold member 80 (cf. Fig. 19C). By applying the plating to the surfaces of the plurality of the parts 81, 82 after the assembling, the surface of the mold member 80 is coated with the plating film 85 and the plurality of the parts 81, 82 are joined to each other and thus integrated by plating. Accordingly, in the mold member 80, a similar effect to that in the mold member 70 is obtained. In addition, with respect to the materials of the plating, it is more preferable to apply plating which is cured by heating to the surface of the mold member 80.

Fig. 20A is a view illustrating a plurality of parts 91, 92 of a mold member 90 before the assembling. Fig.20B is a view illustrating the mold member 90 after assembling (before plating) and Fig. 20C is a view illustrating the mold member 90 after plating. Fig. 20B2 is a sectional view of the mold member 90 taken along the line W3-W3 of Fig. 20B1, and Fig. 20B3 is a side view of the mold member 90 viewed from the direction shown by the arrow W4 of Fig. 20B1. Fig. 20C2 is a sectional view of the mold member 90 taken along the line W3-W3 of Fig. 20C1, and Fig. 20C3 is a side view of the mold member 90 viewed from the direction shown by the arrow W4 of Fig. 20C1.

As illustrated, the mold member 90 is a fixing member which is fixed to the mold main body like the mold member 70 and has a plurality of parts 91, 92. The plurality of parts 91, 92 is rectangular plate-shaped members (cf. Fig. 20A), respectively. The one part 92 has a plurality of holes 93. The mold member 90 is formed like the mold member 70. Specifically, the plurality of the parts 91, 92 of the mold member 90 is assembled so that the mold member 90 is formed to be in a state preceding the plating (cf. Fig. 20B). On this occasion, the plurality of the parts 91, 92 are temporarily jointed to each other by temporary joint processing so as to produce the mold member 90 while the plurality of the parts 91, 92 are superimposed.

Subsequently, the surface of the mold member 90 after the formation is plated so that a plating film 94 is formed on the surface of the mold member 90 (cf. Fig. 20C). By applying the plating to the surfaces of the plurality of the parts 91, 92 after assembling, the surface of the mold member 90 is coated with the plating film 94 and the plurality of the parts 91, 92 are joined to each other and thus integrated by plating. Accordingly, in the mold member 90, a similar effect to that in the mold member 70 is obtained. In addition, with respect to the materials of the plating, it is more preferable to apply plating which is cured by heating to the surface of the mold member 90.

As described above, the plurality of the embodiments has been described by taking an example that the rubber article is a tire, but the rubber article is not limited to a tire, and may be other rubber article.

### (Production test of the mold)

For confirmation of the effect of the present invention, the molds were produced by the production methods described above and the various tests were performed. Results of the tests (the fifth to ninth tests) will be sequentially described.

### (The fifth test)

The mold member 40 (cf. Figs. 13) was produced by the production method of the sixth embodiment and the strengthening of the mold member 40 was evaluated. On the occasion, the mold member 40 made of aluminum alloy (Japanese Industrial Standards: AC4C) was formed by the casting. The shape of the mold member 40 is a shape of a piece of a ring (inside diameter: ϕ 600 mm, minimum thickness: 40 mm, overall height: 300 mm)divided into nine. The mold member 40 after the formation was applied with iron plating (thickness: 30 µm) so that the surface of the mold member 40 was coated with the plating film 43.

In the test, after the molding of the tire by the mold member 40 (the mold 6) was repeated, the mold member 40 was cleaned by sandblast (particle size of the sand: approximately 0.2mm) . As a result, the amount of erosion on the surface of the mold member 40 by one cleaning was not more than 0.01 mm and the amount of erosion could not be measured.
In other words, the erosion on the surface of the mold member 40 was hardly caused by sandblast. In contrast, erosion (thickness reduction, surface roughness) was generated on the surface of mold member 40 by one cleaning when the iron plating was not applied to the surface of the mold member 40. The erosion is about 0.02 mm. It was found that the surface of the mold member 40 is strengthened by plating.

### (The sixth test)

The mold member 50 (cf. Figs. 14, Figs. 15) was produced by the production method of the seventh embodiment and the strengthening of the mold member 50 was evaluated. On the occasion, the mold main body 51 made of aluminum alloy (Japanese Industrial Standards: A5052) was formed by the machining. The shape of the mold main body 51 is a shape of a piece a ring (inside diameter: ϕ 600 mm, minimum thickness : 20 mm, overall height: 300 mm) divided into nine. In addition, about 300 fixing members 52 (sipe blades) (thickness: 0.3-0.4 mm, Japanese Industrial Standards: SUS631) were attached to the mold main body 51. The fixing members 52 were temporarily jointed to the mold main body 51 at the back side of the mold main body 51. The mold member 50 after formation was applied with iron plating (thickness: 40 µm) so that the surface of the mold member 50 was coated with the plating film 56.

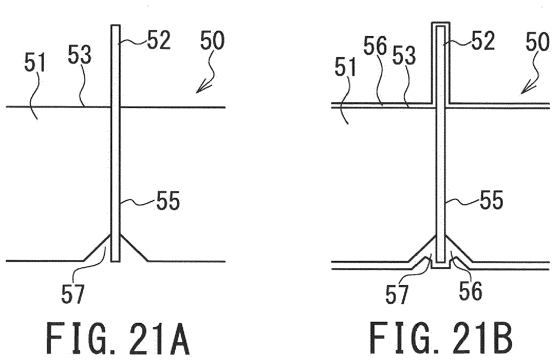

Figs. 21 are a sectional views illustrating a part of the mold member 50 before and after plating and schematically illustrates a peripheral part of one fixing member 52.
As illustrated, a notch part 57 is formed by chamfering (Japanese Industrial Standards: C1-C2) the corners of the insertion part 55 at the back side of the mold main body 51. In addition, the fixing member 52 is inserted in the insertion part 55 and thus an end of the fixing member 52 is located within the notch part 57. In the state, the plating film 56 is formed around the fixing member 52 so as to fill the notch part 57 and thus produces an undercut effect.

In the test, a fixation of the fixing member 52 to the mold main body 51 was evaluated. As a result, rattling of the fixing member 52 did not occur. In addition, a withdrawal resistance value of the fixing member 52 was measured when the fixing member 52 was pulled out from the mold main body 51. The withdrawal resistance value of the fixing member 52 was higher than 150 kgf and not less than the withdrawal=resistance value of the fixing member which was fixed to the mold main body 51 by casting (insert-casting) . It was found that the mold member 50 is strengthened by plating.

### (The seventh test)

The mold member 60 (cf. Figs. 16, Figs. 17) was produced by the production method of the eighth embodiment and the strengthening of the mold member 60 was evaluated. On the occasion, the mold member 60 was formed by the powder laminate shaping. In the powder laminate shaping, the metal powder (particle size: about 30 µm, material: 17% Ni-based maraging steel) is sintered by a laser. The shape of the mold member 60 is a shape of a piece of a ring (inside diameter: ϕ 600 mm, minimum thickness: 3 mm, overall height: 300 mm) divided into nine. In addition, the mold member 60 has about 300 projections 64 (sipe blades, thickness: 0.3-0.4 mm) . The mold member 60 after the formation was applied with iron plating (thickness: 40 µm) so that the surface of the mold member 60 was coated with the plating film 65. The mold member 60 and the holder 61 (material: SS410 (carbon steel)) were slightly adjusted and thereafter the mold member 60 was fitted in the holder 61.

In the test, a tire was molded by the mold 8 having the mold member 60, and heating and temperature rising characteristic of the tire was evaluated. As a result, with the mold 8, heating and temperature rising characteristic of the tire, which is equivalent to that of a mold made of normal aluminum alloy, was obtained. In addition, the usable frequency (life time) of the projection 64 was not less than 30,000 times. In contrast, when iron plating was not applied to the surface of the mold member 60, the heating and temperature rising characteristic of the tire was decreased, and a breakage of the projection 64 was occurred by about 1,000 times use thereof. From this, it was found that the mold member 60 is strengthened by plating.

### (The eighth test)

The mold member 70 (cf. Figs. 18) was produced by the production method of the ninth embodiment and the strengthening of the mold member 70 was evaluated. The first part 71 is a plate-shaped member (thickness: 0.5 mm, length: 20 mm, height: 15 mm, Japanese Industrial Standards: SUS304) . The second part 72 is a rod member (diameter: ϕ 2 mm, Japanese Industrial Standards: SUS304). The second part 72 was located along the edge of the first part 71 and the second part 72 was temporarily jointed to the first part 71 by percussion welding. The mold member 70 after the formation was applied with iron plating (thickness: 50 µm) so that the surface of the mold member 70 is coated with the plating film 73. At the time of the casting of the mold main body (materials: aluminum alloy), the mold member 70 is cast in the mold main body and thus the mold member 70 is fixed to the mold main body.

In the test, a tire was molded by the mold having the mold member 70. As the result, no defect occurred in a peripheral part of the mold member 70 for tire and the tire could be normally molded. In contrast, a gap was generated between the first part 71 and the second part 72 when the iron plating was not applied to the surface of the mold member 70. From this, it was found that by plating, the mold member 60 is simply and easily strengthened and defect can be prevented from being occurred.

### (The ninth test)

As having been described with respect to the ninth embodiment, iron plating (materials: iron containing nitrogen) which is cured by heating was applied to the surface of the mold member and thus the mold member was produced. The mold member is a plate-shaped sipe blade (thickness: 0.2 mm, length: 20 mm, height: 15 mm (including 5 mm of margin for casting), Japanese Industrial Standards: SUS304). The mold member after the formation was applied with iron plating (thickness: 50 µm) so that the surface of the mold member was coated with the plating film which is cured by heating. At the time of the casting of the mold main body, about 300 mold members were cast in the mold main body and thus the mold was produced. The mold main body is made of aluminum alloy (Japanese Industrial Standards : AC4C) . The shape of the mold main body is a shape of a piece of a ring (inside diameter: ϕ 600 mm, minimum thickness: 3 mm, overall height: 300 mm) divided into nine.

In the test, the tire was repeatedly molded by the mold and the usable frequency (life time) of the mold member was investigated. As the result, the usable frequency of the mold member was not less than 30,000 times and permanent deformation was hardly occurred in the mold member. In contrast, a mold was produced without applying iron plating to a mold member (thickness: 0.3 mm, length: 20 mm, height: 15 mm (including 5 mm of margin for casting), Japanese Industrial Standards: SUS304) . In this mold, when the frequency of molding of the tire was less than 100 times, a deflection (permanent deformation) that was bigger than 1 mm was occurred in the mold member. From this, it was found that the mold member was strengthened by plating. Reference Signs List

- 1∼8: mold
- 9: mold assembly
- 10: rubber forming part
- 11: contact part
- 12: projection
- 13: surface
- 14: cast-in part
- 15: through-hole
- 16: through-hole
- 17: vent hole
- 20: holding part
- 21: correcting part
- 22: undercut portion
- 30: projecting member
- 31: wire rod
- 32: vent tube
- 33: casting flask
- 34: partition member
- 40: mold member
- 41: forming part
- 42: vent hole
- 43: plating film
- 50: mold member
- 51: mold main body
- 52: fixing member
- 53: forming part
- 54: vent hole
- 55: insertion part
- 56: plating film
- 57: notch part
- 60: mold member
- 61: holder
- 62: vent hole
- 63: contact part
- 64: projection
- 65: plating film
- 66: surface
- 71, 72: part
- 73: plating film
- 80: mold member
- 81, 82: part
- 83, 84: cut
- 85: plating film
- 90: mold member
- 91, 92: part
- 93: hole
- 94: plating film

## Claims

1. A method for producing mold for rubber article to produce a mold for rubber article provided with; a rubber forming part to mold a rubber article, while being in contact with the rubber article at a contact part, and a holding part to hold the rubber forming part, wherein it comprises steps of:
forming a rubber forming part by sintering of a metal powder, and
casting to cast a part or the whole of parts except for the contact part of the rubber forming part in the holding part and to join the holding part and a cast-in part of the rubber forming part cast in the holding part, at the time of casting of the holding part.

2. The method for producing mold for rubber article according to claim 1, wherein,
in the casting step, the cast-in part of the rubber forming part together with a correcting part is cast in the holding part, while a shape of the rubber forming part is corrected by the correcting part having an undercut shape provided at the cast-in part of the rubber forming part.

3. The method for producing mold for rubber article according to claim 1 or 2, wherein,
the mold for rubber article is provided with projecting members which is projected from both the contact part and the cast-in part of the rubber forming part and are fixed to both the rubber forming part and the holding part,
in the forming step, the rubber forming part having through-holes open to the contact part and the cast-in part is formed, and
in the casting step, the cast-in part of the rubber forming part together with portions projected from the cast-in part of the projecting members is cast in the holding part, while the projecting members are held in the through-holes of the rubber forming part and projected from the contact part and the cast-in part.

4. The method for producing mold for rubber article according to claim 1 or 2, wherein
the mold for rubber article is provided with vent holes which penetrate the holding part and the rubber forming part and open to the contact part,
in the forming step, the rubber forming part having through-holes open to the contact part and the cast-in part is formed,
in the casting step, the cast-in part of the rubber forming part together with the wire rods is cast in the holding part so that the wire rods are projected from the rubber forming part and the holding part, while the wire rods for molding vent hole are located in the through-holes and projected from both the contact part and the cast-in part, and
the wire rods are pulled out of the rubber forming part and the holding part so that the vent holes are formed.

5. The method for producing mold for rubber article according to any of claims 1 to 4, wherein
the mold for rubber article is a part of a ring-shaped mold assembly for molding the rubber article, and
in the casting step, the cast-in parts of the plurality of the rubber forming part are cast in the holding part, while a plurality of the rubber forming parts are assembled into a ring shape.

6. A mold for rubber article to mold a rubber article, wherein it comprises;
a rubber forming part which is a sintered body of the metal powder and molds the rubber article while being in contact with the rubber article at a contact part thereof, and
a holding part which is a cast body having a part or the whole of parts except for the contact part of the rubber forming part cast therein and holds the rubber forming part.

7. A method for producing mold member to produce a mold member used for a mold for rubber article, wherein it comprises steps of:
forming the mold member to be in a state preceding the plating, and
plating to the surface of the mold member after the formation so as to coat the surface of the mold member with a plating film.

8. The method for producing mold member according to claim 7, wherein
the mold member is comprised of a mold main body of the mold for rubber article and fixing members which are fixed to the mold main body,
the forming step includes a step to attach the fixing member to the mold main body, and
in the plating step, the surfaces of the mold main body and the fixing member are coated with the plating film and the fixing member is joined and fixed to the mold main body by plating.

9. The method for producing mold member according to claim 7, wherein
the mold member is the fixing member which is fixed to the mold main body of the mold for rubber article,
the forming step includes a step to assemble a plurality of parts of the fixing member, and
in the plating step, the surface of the fixing member is coated with the plating film and the plurality of the parts of the fixing member are joined to each other and are integrated by plating.

10. The method for producing mold member according to claim 7, wherein
the mold member is the fixing member which is fixed to the mold main body of the mold for rubber article,
in the plating step, plating which is cured by heating is applied to the surface of the fixing member, and
the fixing member is cast in the mold main body, when the mold main body is molded by casting.

11. The method for producing mold member according to any of claims 7 to 10, wherein
the forming step includes a step to laminate cured layers made of cured powder so that the mold member is formed.

12. The method for producing mold member according to any of claims 7 to 10, wherein
the plating is iron plating.

13. A mold member used for a mold for rubber article, wherein it includes
a plating film coating the surface thereof.
